# EUROPEAN PATENT APPLICATION

(11) **EP 4 233 552 A1**
(43) Date of publication of application: **30.08.2023**
(21) Application number: 22305219.2
(22) Date of filing: 25.02.2022
(51) Int. Cl.: A23D 7/01, A23K 20/158, A23K 20/28, A23K 50/30, A23K 50/75, A23K 50/70, A23K 50/80, A23D 7/005

(54) **EMULSIFIER MIXTURE**

(71) Applicant: Oleon N.V., 9940 Ertvelde (BE); Berg+Schmidt Asia Pte. Ltd., 609917 Singapore (SG)
(72) Inventor: VAN DER WEEËN, Pieter, 9040 SINT-AMANDSBERG (Gent) (BE); TEULON, Nadine, 60126 LONGUEIL SAINTE MARIE (FR); DEPREY, Sophie, 60280 MARGNY-LES-COMPIEGNE (FR); WESTPHAL, Dirk, 659765 SINGAPORE (SG); ZSARNOCZAY, Sandor, 1172 BUDAPEST (HU)
(74) Representative: Santarelli

(57) **Abstract**

The present invention relates to a specific combination and its ability to emulsify lipids contained in feed products.

## Description

The present invention relates to a specific combination comprising lecithin and its use of in feed products.

Lecithin is a generic term that is used to describe a multi-component blend containing phospholipids, triglycerides, glycolipids and optionally sterol(s) and/or protein(s).

Lecithin can be obtained from plant, in particular from seeds, and from animal, in particular from egg yolk or from milk.

Phospholipids are involved in the reduction of mortality, since less mortality is observed when animals are fed regularly with.

Phospholipids supply highly available nutrients such as choline, inositol and phosphorus, essential fatty acids.

Phospholipids promote the absorption of vitamins (A, D, E, K), carotenoids and pigments.

Phospholipids also promote the digestion of lipids by assisting the bile acids in forming emulsion globules in the small intestine and promoting the absorption of lipids at the intestinal mucosa. By improving the lipids absorption, especially in the first stage of the animal life, the animal growth is faster.

Lipids are a substantial part of the cost of a feed product. By improving the absorption and utilization of the lipids by the animal, the quantity percentage of lipids in the feed can be reduced. This represents an economic advantage.

Lipids can be of vegetable origin (i.e. soybean oil, sunflower oil, palm oil, etc) or of animal origin (i.e. tallow, chickenfat, lard, etc.). Lipids are mainly triglycerides, comprising saturated and unsaturated acyl chains.

Therefore, for all those reasons, it is advantageous to feed animals with lecithin comprising phospholipids. However, there is a need to improve the emulsifying property of lecithin to allow decreasing the amount of lipids in the feed while improving lipids absorption during digestion, in order to keep the same total calories available to the animal for growth the same. Indeed, lecithin, used alone, is not able to emulsify lipids efficiently.

The inventors surprisingly found that a specific combination, rich in phospholipids, may ease the emulsification of lipids.

Accordingly, the present invention relates to a combination comprising or consisting of
- 2.4-15% by weight of de-oiled lecithin;
- a hydrolyzed lecithin;
- sorbitan monostearate; and
- 0-40% by weight of an anticaking agent;
wherein the weight ratio sorbitan monostearate / hydrolyzed lecithin is comprised between 60/40 and 80/20.

In the present application, unless otherwise indicated, all ranges of values used are to be understood as being inclusive limits.

De-oiled lecithin is a lecithin free or with a limited content of oil (e.g. triglyceride) and thus enriched in phospholipids.

Preferably, de-oiled lecithin comprises at least 92% by weight of acetone insoluble matter, more preferably at least 94% by weight, even more preferably at least 97% by weight of acetone insoluble matter based on the weight of the de-oiled lecithin.

Preferably, the de-oiled lecithin is in the form of a powder.

A hydrolyzed lecithin is a lecithin where the ester bonds of phospholipids were partially hydrolyzed to form alcohol functions.

Preferably, the lecithin of the de-oiled lecithin and the hydrolyzed lecithin are each independently obtained from seeds, in particular from sunflower seeds, soybean seeds or rapeseeds.

Sorbitan monostearate (CAS n° 1338-41-6) is a non-ionic surfactant.

The anticaking agent is preferably a silica based product, calcium carbonate or limestone.

Advantageously, in the combination according to the invention, the weight ratio sorbitan monostearate / hydrolyzed lecithin is comprised between 60/40 and 75/25.

Preferably, the weight ratio sorbitan monostearate / hydrolyzed lecithin is comprised between 60/40 and 70/30, in particular the weight ratio sorbitan monostearate / hydrolyzed lecithin is of 70/30.

Preferably, the quantity of de-oiled lecithin is of at least 3% by weight, more preferably at least 3.5% by weight, even more preferably at least 4% by weight based on the weight of the combination.

Preferably, the quantity of de-oiled lecithin is of at most 10% by weight, even more preferably at most 9.5% by weight based on the weight of the combination.

Preferably, the quantity of the anticaking agent is comprised between 0 and 40, more preferably between 20 and 40% by weight based on the weight of the combination.

Preferably, the quantity of hydrolyzed lecithin is of at least 13% by weight, more preferably at least 17% by weight based on the weight of the combination.

Preferably, the quantity of hydrolyzed lecithin is of at most 39% by weight, more preferably at most 33% by weight based on the weight of the combination.

Preferably, the quantity of sorbitan monostearate is of at least 39% by weight, more preferably at least 52% by weight based on the weight of the combination.

Preferably, the quantity of sorbitan monostearate is of at most 78% by weight, more preferably at most 65% by weight based on the weight of the combination.

In a first embodiment, the combination according to the invention does not comprise an anticaking agent.

Preferably, the combination according to the invention comprises or consists of:
- 4-10 % by weight of de-oiled lecithin;
- hydrolyzed lecithin;
- sorbitan monostearate;
wherein the quantity of sorbitan monostearate and hydrolyzed lecithin is comprised between 90 and 96% by weight; and
wherein the weight ratio sorbitan monostearate / hydrolyzed lecithin is comprised between 60/40 and 75/25;
weight percentages being based on the weight of the combination.

In a second embodiment, the combination according to the invention do comprise an anticaking agent.

Preferably, the combination according to the invention comprises or consists of:
- 3-8 % by weight of de-oiled lecithin;
- hydrolyzed lecithin;
- sorbitan monostearate;
- 20-40% by weight of a anticaking agent;
wherein the quantity of sorbitan monostearate and hydrolyzed lecithin is comprised between 52 and 77% by weight; and
wherein the weight ratio sorbitan monostearate / hydrolyzed lecithin is comprised between 60/40 and 75/25;
weight percentages being based on the weight of the combination.

Preferably, in the combinations according to the invention, the weight ratio sorbitan monostearate and hydrolyzed lecithin / de-oiled lecithin is comprised between 7 and 32, more preferably between 9.5 and 24.

Advantageously, in the ccombination according to the invention, the hydrolyzed lecithin is a sunflower hydrolyzed lecithin.

Advantageously, the combination according to the invention is in the form of a powder.

The present invention also relates to a process for preparing a combination according to the invention, comprising the following steps:
i) mixing and heating sorbitan monostearate and a hydrolyzed lecithin until a melted mixture is formed;
ii) cooling down the melted mixture obtained in step i) to form a cooled mixture;
iii) blending the cooled mixture obtained in step ii), and optionally an anticaking agent, with de-oiled lecithin.

In step i), the temperature of heating is preferably of at least 50°C, more preferably of at least 54°C. Preferably the temperature is comprised between 50 and 65°C, more preferably between 54 and 60°C.

In step ii), the melted mixture is preferably cooled down by spreading it on an aluminum foil to form a cooled mixture in the form of a film that can be broken into flakes or by spraying it in a spray congealing tower to form a cooled mixture in the form of beads.

The cooled mixture, in particular flakes, can then be crushed to form a powder.

Preferably, the de-oiled lecithin is in the form of a powder.

This specific combination can easily form an oil-in-water emulsion, in particular when the oil is composed of unsaturated triglycerides.

The present invention also concerns a method for improving the emulsification of one or more lipid(s), by adding a combination according to the invention, to said lipid(s).

The one or more lipid(s) may be saturated and/or unsaturated.

Lipid(s) is/are preferably triglyceride(s), more preferably unsaturated triglyceride(s), e.g. triglyceride(s) comprising one or more unsaturated acyl chain(s). In particular, unsaturated triglyceride(s) comprise at least 30% by weight of unsaturated acyl chains. Preferably, unsaturated acyl chains are C18 acyl chains, e.g. acyl chains comprising 18 carbon atoms.

Preferably, the one or more lipid(s) is a mixture of unsaturated triglycerides. In particular, the mixture of unsaturated triglycerides comprises at least 30% by weight, preferably at least 50% by weight, more preferably at least 70% by weight of unsaturated acyl chain(s). More particularly, the mixture of unsaturated triglycerides comprises at least 70% by weight of C18 acyl chain(s) comprising one or two double bonds.

As illustrated in Example 2.2 and 2.3, combinations according to the invention allow to emulsify and re-emulsify unsaturated lipids such as sunflower oil and soybean oil in water.

These characteristics are particularly interesting in the field of animal nutrition, since during digestion, animals can either be in stationary or animated state. In all cases, in the presence of a combination according to the invention, the lipids can then easily be emulsified and re-emulsified in the stomach and intestines with limited kinetic energy.

The present invention also concerns an oil-in-water emulsion comprising:
- one or more lipid(s);
- water; and
- a combination according to the invention.

The one or more lipid(s) is/are as described above, including preferential features.

The quantity of water is preferably of at least 70% by weight, more preferably of at least 80% by weight based on the weight of the oil-in-water emulsion.

The total quantity of lipid(s) is preferably of at least 2.5% by weight, more preferably of at least 10% by weight based on the weight of the oil-in-water emulsion.

The total quantity of lipid(s) is preferably of at most 20% by weight, more preferably of at most 15% by weight, even more preferably of at most 12.5% by weight based on the weight of the oil-in-water emulsion.

By "total quantity of lipid(s)", it is intended the quantity of all molecules of lipids.

The quantity of the combination according to the invention is preferably of at least 0.01% by weight, more preferably of at least 0.1% by weight, even more preferably of at least 0.25% by weight based on the weight of the oil-in-water emulsion.

The quantity of the combination according to the invention is preferably of at most 2.5% by weight, more preferably of at most 2% by weight, even more preferably of at most 1.5% by weight based on the weight of the oil-in-water emulsion.

Preferably, the quantity of the combination according to the invention is comprised between 0.01 and 2.5% by weight; more preferably between 0.1 and 2.5% by weight, such as between 0.1 and 2.0% by weight, 0.1 and 1.5% by weight; even more preferably between 0.25 and 2.5% by weight, such as between 0.25 and 2.0% by weight, 0.25 and 1.5% by weight, weight percentages being based on the weight of the oil-in-water emulsion.

The present invention also relates to a feed product comprising a combination according to the invention.

Preferably, the feed product comprises at least 100 g per ton, more preferably at least 125 g of a combination according to the invention per ton of feed product.

The feed product may be powder, pellets, crumbs or flakes of cereal.

The present invention also relates to a method for gaining weight to an animal, by feeding him with the combination according to the invention.

The animal is preferably a small animal, such as chicken, bird, fish, duck, rabbit, piglet, and shrimp.

Preferably, the combination is comprised in a feed product.

As shown in Example 3, the more the feed product comprises a combination according to the invention, the more the weight gain of the animal, in particular after at least 3 weeks fed with at least 125 g of combination per ton of feed product.

The invention is further described in the following examples. It will be appreciated that the invention as claimed is not intended to be limited in any way by these examples.

### Example 1: Preparation of combinations in the form of a powder

Sorbitan monostearate (RADIAMULS SORB 2145K from Oleon) and hydrolyzed lecithin (LECICO SUN FM 580 from Lecico; hydrolyzed sunflower lecithin comprising 56% of acetone insoluble matter, mainly phospholipids and glycolipids) were heated at 57°C until sorbitan monostearate melted under stirring.

Then, the resulting mixture was cooled down on an aluminum foil to form a film that was then broken to form flakes. The flakes were crushed to form a powder.

Content of mixtures 1 and 2 are described in Table 1 below.

Comparative mixtures 1 and 2 were prepared according to the same method described above and quantities described in Table 1 below.

**Table 1: Content of the mixtures 1 and 2 and of the comparative mixtures 1 and 2**

| | Sorbitan mono stearate | Hydrolyzed lecithin |
|---|---|---|
| Mixture 1 (M1) | 60 wt% | 40 wt% |
| Mixture 2 (M2) | 70 wt% | 30 wt% |
| Comparative mixture 1 (CM1) | 30 wt% | 70 wt% |
| Comparative mixture 2 CM2 | 50 wt% | 50 wt% |

Then, combinations 1-3 according to the invention were obtained by mixing de-oiled lecithin (Bergapur from Berg + Schmidt; de-oiled soya lecithin in the form of a powder comprising 97% of acetone insoluble matter, mainly phospholipids) and the mixture 1 or 2 prepared above, according to quantities described in Table 2 below.

Comparative combinations 1 and 2 were prepared by mixing de-oiled lecithin (Bergapur from Berg + Schmidt; de-oiled soya lecithin in the form of a powder comprising 97% of acetone insoluble matter, mainly phospholipids) and the comparative mixture 1 or 2 prepared above according to quantities described in Table 2 below.

**Table 2: Content of the combinations 1-3 according to the invention and of the comparative combinations 1 and 2**

| | De-oiled lecithin | Mixture | Weight ratio mixture / de-oiled lecithin |
|---|---|---|---|
| Combination 1 | 6.7 wt% | 93.3 wt% of M1 | 13.9 |
| Combination 2 | 4.0 wt% | 96.0 wt% of M2 | 24.0 |
| Combination 3 | 9.5 wt% | 90.5 wt% M2 | 9.5 |
| Comparative combination 1 | 5.0 wt% | 95.0 wt% of CM1 | 19.0 |
| Comparative combination 2 | 8.0 wt% | 92.0 wt% of CM2 | 11.5 |

### Example 2: Oil-in-water emulsions

### 2.1 Chemicals used

- Combinations 1-3 according to the invention prepared in Example 1;
- Comparative combination 2 prepared in Example 1;
- Oils:
   ∘ refined soybean oil: Radia 6119 Phytorob ST from Oleon;
   ∘ refined sunflower oil: Radia 6121 Phytorob SFO from Oleon.

### 2.2 Preparation of oil-in-water emulsions 1-4

Emulsions 1-4 were prepared according to method described below and quantities described in Table 3.

A combination according to the invention and an oil were put into a glass bottle, which, once closed, was heated up to 80°C for 1 hour.

Tap water heated at 50°C was put in a graduated cylinder.

The combination and the oil were added at the top of the cylinder after reaching 45°C.

The cylinder was then inverted once and formation of an emulsion could be observed.

**Table 3: Content of the emulsions 1-4 according to the invention**

| | Emulsion 1 | Emulsion 2 | Emulsion 3 | Emulsion 4 |
|---|---|---|---|---|
| Combination 1 | 0.25 wt% | 0.25 wt% | | |
| Combination 2 | | | 0.25 wt% | |
| Combination 3 | | | | 0.25 wt% |
| Soybean oil | 12.5 wt% | | 12.5 wt% | 12.5 wt% |
| Sunflower oil | | 12.5 wt% | | |
| Tap water | Qsp 100 wt% | Qsp 100 wt% | Qsp 100 wt% | Qsp 100 wt% |

### 2.3 Characteristics of oil-in-water emulsions 1-4

To test the stability of each emulsion, each cylinder was then inverted 10 times.

Each emulsion was stable enough, since no creaming nor oil out was observed just after the inversions. Dephasing started to appear after at least 1 minute.

To test the re-emulsification capacity, each emulsion was left to rest for 1 hour, so complete two clear phases (aqueous and oily phases) could be observed. Then, each cylinder was inverted one more time.

It could be observed that an emulsion formed once again in each cylinder comprising a combination according to the invention.

### 2.4 Comparative examples

Attempts to form an emulsion were carried out following method described in Example 2.2 using :
- A: 12.5 wt% of soybean oil and 0.25 wt% of comparative combination 1 instead of a combination according to the invention;
- B: 12.5 wt% of soybean oil and 0.25 wt% of comparative combination 2 instead of a combination according to the invention;
- C: 12.5 wt% of soybean oil and 0.25 wt% of de-oiled lecithin (Bergapur from Berg + Schmidt) instead of a combination according to the invention

No emulsion could be formed in all cases A, B and C.

Thus, only combinations according to the invention, with specific weight ratio, allow formation of oil-in-water emulsions. Those emulsions are stable for at least 1 min at a temperature comprised between 35 and 45°C, and can easily re-emulsify. Moreover, no high speed stirring is needed to emulsify and re-emulsify.

### Example 3: Evaluation of the contribution of the combination according to the invention to the weight gain of chicken

### 3.1 Method

Four treatment units containing each 375 chicken were created, where adequate floorspace, number of drinkers and feeders were provided.

Three application dosages of combination 3bis were tested, 125 g/ton, 250 g/ton and 500 g/ton, and incorporated onto Gold Coin (Malaysia; comprising triglycerides with unsaturated C18 acyl chains) pelleted commercial broiler feeds (Starter/Grower/Finisher).

Combination 3bis was prepared as combination 3, with addition 20 wt% based on the weight of combination 3bis of an anticaking agent (silica) during the mixing of de-oiled lecithin with mixture 2.

In the fourth treatment unit, "Control", chicken were fed with Gold Coin (Malaysia) pelleted commercial broiler feeds.
Weeks 1-2, 20 chickens were weighed per treatment unit.
Weeks 3-4, 40 chickens were weighed per treatment unit.
Week 5 (harvest time): all the chickens were weighed.
Chicken were weighted and mortality were recorded weekly.

### 3.2 Results

**Table 4: Average weight of chickens (g)**

| | 500 g/ton | 250 g/ton | 125 g/ton | Control |
|---|---|---|---|---|
| Week 1 | 209.75 | 188.4 | 176.65 | 191.3 |
| Week 2 | 522.5 | 495.0 | 482.5 | 497.5 |
| Week 3 | 895.0 | 870.0 | 822.5 | 752.5 |
| Week 4 | 1505.0 | 1400 | 1275.0 | 1140.0 |
| Week 5 | 2230.4 | 2172.0 | 2100.0 | 1650.0 |

Mortality after 5 weeks:
Control unit: 16 (4.2%)
Treatment unit with 125 g/ton: 3 (0.80%)
Treatment unit with 250 g/ton: 5 (1.33%)
Treatment unit with 500 g/ton: 0

It can be observed that chickens fed with a feed product comprising a combination according to the invention, gained more weight after 5 weeks than chickens fed with feed product comprising no combination according to the invention.

With 500 g of combination 2 per ton of feed product, the average weight of chicken fed with it is greater after the first week than the average weight of chicken fed without combination according to the invention (control).

After 5 weeks, with only 125 g of combination 2 per ton of feed product, the average weight of chicken is around 27% greater than the average weight of chicken fed without combination according to the invention.

Moreover, the mortality of chicken fed with the combination according to the invention is lower than the mortality of chicken fed without combination according to the invention. In particular, the mortality is divided by at least 3, by using at least 125 g of combination according to the invention per ton of feed product.

## Claims

1. Combination comprising or consisting of:
- 2.4-15% by weight of de-oiled lecithin;
- a hydrolyzed lecithin;
- sorbitan monostearate; and
- 0-40% by weight of an anticaking agent;
wherein the weight ratio sorbitan monostearate / hydrolyzed lecithin is comprised between 60/40 and 80/20.

2. Combination according to claim 1, wherein the weight ratio sorbitan monostearate / hydrolyzed lecithin is comprised between 60/40 and 75/25.

3. Combination according to claim 1 or 2, wherein the hydrolyzed lecithin is a sunflower hydrolyzed lecithin.

4. Combination according to any of claims 1 to 3, wherein the combination is in the form of a powder.

5. Process for preparing a combination according to any of claims 1-4, comprising the following steps:
iv) mixing and heating sorbitan monostearate and a hydrolyzed lecithin until a melted mixture is formed;
v) cooling down the melted mixture obtained in step i) to form a cooled mixture;
vi) blending the cooled mixture obtained in step ii), and optionally an anticaking agent, with de-oiled lecithin.

6. Method for improving the emulsification of one or more lipid(s), by adding a combination according to any of claims 1 to 4, to said lipid(s).

7. Oil-in-water emulsion comprising:
- one or more lipid(s);
- water; and
- a combination according to any of claims 1 to 4.

8. Feed product comprising a combination according to any of claims 1 to 4.

9. Method for gaining weight to an animal, by feeding him with the combination according to any of claims 1 to 4.
